**Europäisches Patentamt**

**European Patent Office**

**Office européen des brevets**

(19)

(11) Veröffentlichungsnummer: **0 031 087**
**B1**

(12) # EUROPÄISCHE PATENTSCHRIFT

(45) Veröffentlichungstag der Patentschrift:
**23.11.83**

(51) Int. Cl.³: **B 21 D 5/01**, B 21 D 37/14

(21) Anmeldenummer: **80107817.1**

(22) Anmeldetag: **11.12.80**

(54) Anordnung zur Höhenverstellung des Matrizenbodens von Biegewerkzeugen zum Biegen von Blechen.

(30) Priorität: **22.12.79 DE 2952108**

(43) Veröffentlichungstag der Anmeldung:
**01.07.81 Patentblatt 81/26**

(45) Bekanntmachung des Hinweises auf die Patenterteilung:
**23.11.83 Patentblatt 83/47**

(84) Benannte Vertragsstaaten:
**AT BE CH FR GB IT LI NL**

(56) Entgegenhaltungen:
**DE - A - 2 344 416**
**DE - B - 2 316 953**
**DE - B - 2 627 517**
**DE - C - 616 783**
**DE - C - 725 311**
**DE - C - 737 550**
**GB - A - 1 495 217**
**US - A - 2 199 864**

(73) Patentinhaber: **HAEMMERLE AG, CH-4800 Zofingen (CH)**

(72) Erfinder: **Zbornik, Vaclav, Titlisstrasse 4, CH-4665 Oftringen (CH)**

(74) Vertreter: **Rottmann, Richard, Dipl.-Ing., Rottmann Patentanwälte AG Dufourstrasse 101, CH-8008 Zürich (CH)**

ACTORUM AG

Anordnung zur Höhenverstellung des Matrizenbodens von Biegewerkzeugen zum Biegen von Blechen

Die vorliegende Erfindung betrifft eine Anordnung zur Höhenverstellung des Matrizenbodens von Biegewerkzeugen zum Biegen von Blechen.

Aus der auf die Anmelderin zurückgehenden DE-B2- 2 316 953 ist bereits ein Biegewerkzeug zum Biegen von Blechen bekanntgeworden, welches eine Biegeschiene und eine mit dieser zusammenwirkende Biegematrize umfasst. Die Biegematrize ist an ihrer, der Biegeschiene zugekehrten Oberfläche mit einer längsverlaufenden Vertiefung versehen, deren Querschnitt im Prinzip beliebig ausgebildet sein kann. Beim freien Biegen liegt das zu biegende Blech einerseits entlang zweier Geraden auf der Matrize und entlang einer Geraden auf der Biegeschiene auf. Dabei ist der im Blech gebildete Winkel umso spitzer, je weiter die Biegeschiene in die Vertiefung der Matrize eintaucht.

Bei einer solchen Anordnung wurde ferner vorgeschlagen, am Grund der Vertiefung eine Anschlagleiste vorzusehen, mittels welcher der Abstand des Matrizengrundes von der Matrizenoberfläche einstellbar ist. Dabei hat sich als zweckmässig erwiesen, die Grundfläche der Vertiefung in der Matrize auf ihrer ganzen Länge mit einer Anzahl nebeneinander angeordneten schiefen Ebenen zu versehen. Dementsprechend weist die Unterseite der Anschlagleiste eine entsprechende Anzahl abgeschrägter Flächen auf. In dieser Weise wird ein Sägezahn-Keilsystem gebildet, bei welchem durch die Verschiebung des Unterkeiles gegenüber dem Oberkeil die Höhe des Matrizenbodens geändert wird. Der Matrizenboden kann durch die erwähnte Anschlagleiste oder durch die Stirnflächen von vertikal verschiebbar geführten Stiften gebildet werden. Diese Ausführung hat sich sehr gut bewährt. Bei Präzisionsarbeiten tritt aber der Nachteil auf, dass im Bereiche der Lücken, welche bei der Verschiebung der beiden Keile gegeneinander entstehen, durch die auftretende grosse Belastung eine unerwünschte Durchfederung auftritt.

Zweck der Erfindung ist es, eine verbesserte Anordnung zur Höhenverstellung des Matrizenbodens vorzuschlagen, bei welcher der oben erwähnte Nachteil nicht mehr auftreten kann. Zur Lösung der gestellten Probleme wird von einer Anordnung zur Höhenverstellung des Matrizenbodens von Biegewerkzeugen zum Biegen von Blechen ausgegangen, wobei die Verstellung mit Hilfe eines Sägezahn-Keilsystems erfolgt, welches einen sägezahnartigen Unterkeil und einen entsprechend geformten, auf dem Unterkeil verschiebbaren Oberkeil aufweist, auf welchem der durch eine Anschlagleiste oder vertikal verschiebbaren Stiften gebildete Matrizenboden direkt oder indirekt aufruht.

Erfindungsgemäss sind mehrere gemeinsam betätigbare Sägezahn-Keilsysteme so nebeneinander angeordnet, dass in jedem der Keilsysteme die Lücken, die bei der gegenseitigen Verschiebung des Ober- und Unterkeils enstehen, gegenüber ähnlichen Lücken der benachbarten Keilsysteme in der Längsrichtung versetzt sind.

Zweckmässigerweise ist jedes der Sägezahn-Keilsysteme gegenüber benachbarten Sägezahn-Keilsystemen wenigstens um einen Bruchteil der Sägezahnteilung versetzt angeordnet. Es ist ferner vorteilhaft, wenn die gegeneinander aufliegenden Gleitflächen der Keile mit als Ölnuten dienenden Querrillen versehen sind.

Auf beiliegenden Zeichnungen ist ein Ausführungsbeispiel des Erfindungsgegenstandes schematisch dargestellt, und zwar zeigen:

Fig. 1 eine auseinandergezogene, perspektivische Ansicht des Keilsystems,

Fig. 2 die Ausbildung eines oberen Keils in Seitenansicht,

Fig. 3 die Ausbildung eines unteren Keils, ebenfalls in Seitenansicht,

Fig. 4 die Ausbildung eines Keilsystems in Horizontalschnitt, und

Fig. 5 die schematische Anordnung mehrerer Keilsysteme nebeneinander.

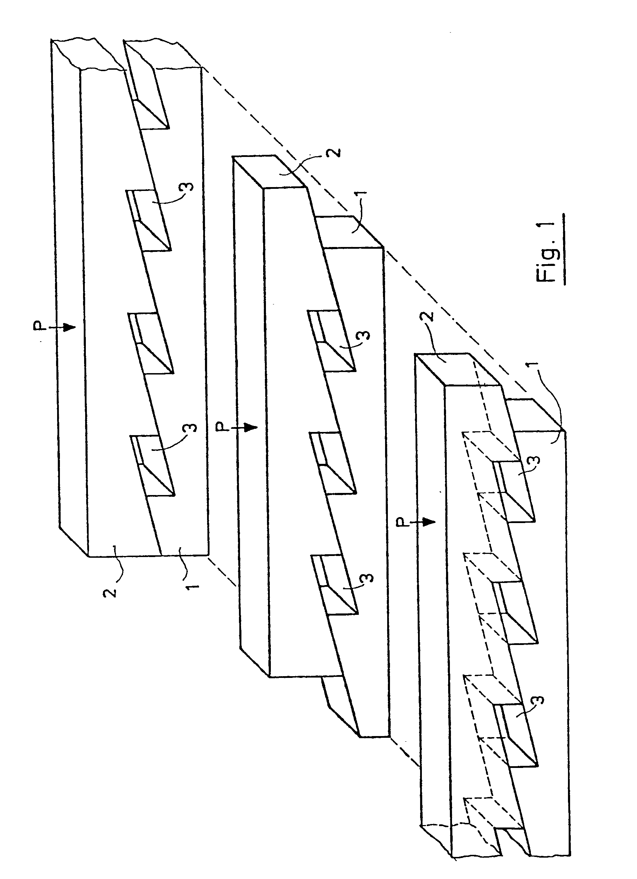

Zur Verstellung des Matrizenbodens von Biegewerkzeugen werden Sägezahn-Keilsysteme verwendet, welche je aus einem Unterkeil 1 und aus einem Oberkeil 2 bestehen. Wie aus der Darstellung in der Fig. 1 ersichtlich ist, treten bei der Verschiebung des Oberkeils 2 gegenüber dem Unterkeil 1 Lücken 3 auf, welche zu einer Durchfederung des Oberkeils 2 unter Einwirkung von vertikal wirkenden Kräften P führen. Erfindungsgemäss werden nun mehrere Sägezahn-Keilsysteme zusammengefasst, sodass die Lücken zweier benachbarter Systeme in der Längsrichtung versetzt sind.

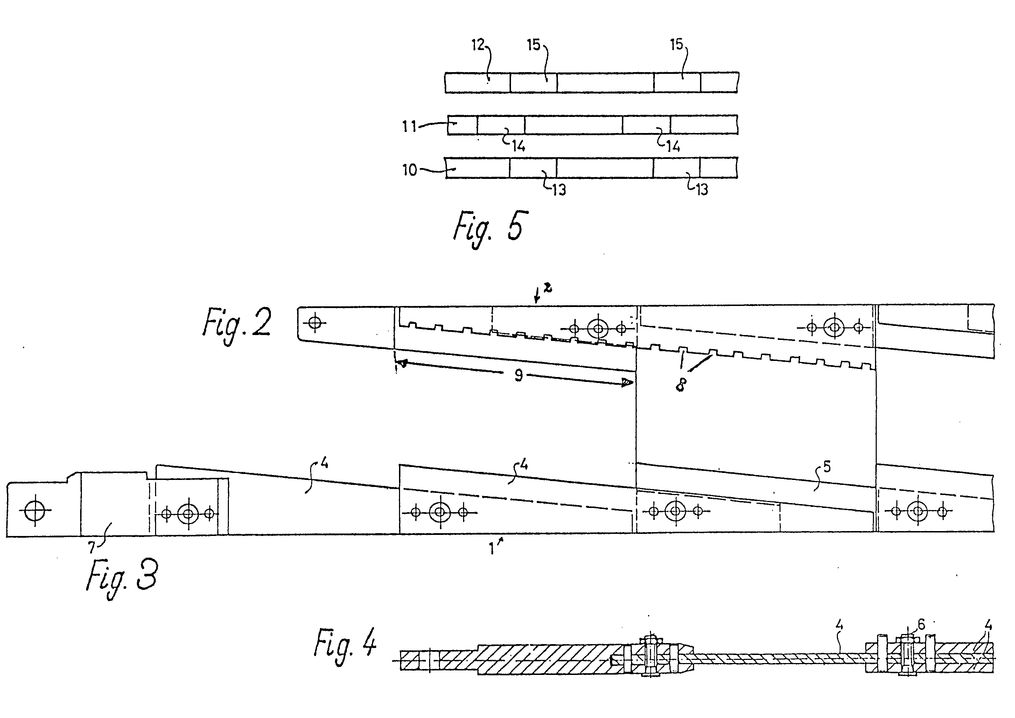

Ein Unterkeil 1 wird gemäss Fig. 3 aus mehreren Grundkeilen 4 und aus Mittelkeilen 5 zusammengesetzt, welche durch Zylinderschrauben 6 zusammengehalten werden. Die Keilsysteme weisen beiderends je ein Kopfstück 7 auf, mittels welchem die Verschiebung erfolgt.

Die Fig. 2 zeigt den Oberkeil 2, welcher ähnlich wie der Unterkeil aus Grund- und Mittelkeilen aufgebaut ist. Es ist ferner noch zu erwähnen, dass die gegeneinander aufliegenden Gleitflächen des oberen und des unteren Keiles mit Querrillen 8 versehen sind, welche als Ölnuten dienen und dafür sorgen, dass die selbsthemmende Wirkung der beiden aufeinander gleitenden Keilteile auch unter Schmierstoffeinfluss aufrechterhalten bleibt.

Die Sägezahnteilung der Keilsysteme ist in den Fig. 2 und 3 mit 9 bezeichnet. Nach dem erfindungsgemässen Vorschlag werden jetzt mehrere der beschriebenen Sägezahn-Keilsysteme so nebeneinander angeordnet, dass in jedem der Keilsysteme die Lücken, die bei der gegenseitigen Verschiebung des Ober- und Unterkeils entstehen, gegenüber ähnlichen Lücken benachbarter Keilsysteme in der Längsrichtung versetzt sind. So sind aus Fig. 5 drei Systeme 10, 11 und 12 rein schematisch ersichtlich, bei welchen die Lücken 13, 14 und 15 gegeneinander in der Längsrichtung verschoben sind, wobei die Verschiebung einen Bruchteil der Sägezahnteilung beträgt. In dieser Weise wird ein Durchfedern der Keile zuverlässig verhindert, sodass das Biegewerkzeug mit grösster Präzision arbeiten wird.

## Patentansprüche

1. Anordnung zur Höhenverstellung des Matrizenbodens für Biegewerkzeuge zum Biegen von Blechen, wobei die Verstellung mit Hilfe eines Sägezahn-Keilsystems erfolgt, welches einen sägezahnartigen Unterkeil (1) und einen entsprechend geformten, auf dem Unterkeil (1) verschiebbaren Oberkeil (2) aufweist, auf welchem der durch eine Anschlagleiste oder vertikal verschiebbaren Stiften gebildete Matrizenboden direkt oder indirekt aufruht, dadurch gekennzeichnet, dass mehrere gemeinsam betätigbare Sägezahn-Keilsysteme (10, 11, 12) so nebeneinander angeordnet sind, dass in jedem der Keilsysteme die Lücken (3 bzw. 13, 14, 15), die bei der gegenseitigen Verschiebung des Ober- und Unterkeils (2, bzw. 1) entstehen, gegenüber ähnlichen Lücken der benachbarten Keilsysteme in der Längsrichtung versetzt sind.

2. Anordnung nach Anspruch 1, dadurch gekennzeichnet, dass die Lücken (3 bzw. 13, 14, 15) der benachbarten Keilsysteme um einen Bruchteil der Sägezahnteilung versetzt sind.

3. Anordnung nach Ansprüchen 1 oder 2, dadurch gekennzeichnet, dass die gegeneinander aufliegenden Gleitflächen der Keile mit als Ölnuten dienenden Querrillen versehen sind.

## Claims

1. Mechanism for vertical adjustment of the die or moulding base for bending tools for bending sheet metal, the adjustment being performed by means of a sawtooth taper system comprising a bottom taper (1) of sawtooth-like nature and a correspondingly shaped top taper (2) displaceable on the bottom taper (1), the die or moulding base formed by an impingement bar or vertically displaceable pins resting directly or indirectly on said top taper (2), charactered in that several conjointly actuatable sawtooth taper systems (10, 11, 12) are arranged side-by-side in such manner that gaps (3 resp. 13, 14, 15) formed during reciprocal displacement of the top and bottom tapers (2, resp. 1) in each of the taper systems are staggered in longitudinal direction with respect to analogous gaps of the adjacent taper systems.

2. Mechanism according to claim 1, characterised in that the gaps (3 resp. 13, 14, 15) of the adjacent taper systems are staggered through a fraction of the sawtooth pitch.

3. Mechanism according to claims 1 or 2, characterised in that the sliding surfaces in mutual contact of the tapers are provided with transverse flutes acting as oil grooves.

## Revendications

1. Dispositif pour le réglage en hauteur du fond de matrice d'un outil de pliage pour le pliage de tôles, dans lequel le mouvement est produit à l'aide d'un système de cales à denture, comprenant une cale inférieure (1) à denture et une cale supérieure (2) de forme complémentaire et pouvant glisser sur la cale inférieure (1), et au moyen de laquelle le fond de matrice formé par une baguette ou des broches coulissantes verticales est mis en mouvement directement ou indirectement, caractérisé en ce qu'une pluralité de systèmes de cales à denture (10, 11, 12) à commande commune sont disposés l'un à côté de l'autre de telle sorte que, dans chacun des systèmes de cale, les interstices (13, 14, 15) apparaissant lors du déplacement contraire de la cale supérieure et la cale inférieure (2, 1), soient décalés longitudinalement par rapport aux interstices analogues du système de cale voisin.

2. Dispositif selon la revendication 1, caractérisé en ce que les interstices (13, 14, 15) de systèmes de cale voisins sont décalés d'une fraction du pas de denture.

3. Dispositif selon l'une quelconque des revendications 1 et 2, caractérisé en ce que les surfaces planes des cales en regard l'une de l'autre sont munies de rayures transversales servant de rainures de graissage.

Fig. 1

Fig. 5

Fig. 2

Fig. 3

Fig. 4

0 031 087